# EUROPEAN PATENT APPLICATION

(11) **EP 4 356 794 A1**
(43) Date of publication of application: **24.04.2024**
(21) Application number: 22813881.4
(22) Date of filing: 01.06.2022
(51) Int. Cl.: A47J 31/06

(54) **COMPOSTABLE SINGLE-SERVE FILTER SACHET FOR PREPARING FILTER COFFEE, TEA AND BEVERAGES**

(30) Priority: 04.06.2021 BR 102021010931; 03.05.2022 BR 102022008509
(71) Applicant: JURERÊ CAFFE COMÉRCIO DE ALIMENTOS LTDA, 88200000 Santa Catarina (BR)
(72) Inventor: SILVA, Eurli, 88240-000 São João Batista - SC (BR)
(74) Representative: Garavelli, Paolo
(86) International application number: PCT/BR2022/050191
(87) International publication number: WO 2022/251937

(57) **Abstract**

The present invention relates to a sachet (1) compactable coffee filter with bag support made of compostable and/or biodegradable material comprising:
- a filter bag comprising a cut line in the upper part;
- supporting tabs welded in the central region of said filter bag comprising a connecting frame , internal and external supporting structures, with a thin upper and lateral margin of the supporting tabs , and is the part that is welded, using paper welding, to the filter bag ; said foldable tabs starting from a first sachet-shaped state to a second state where the internal supporting structure detaches from the connecting frame and the external supporting structure detaches from the internal structure in order to form a tongue that presses the internal part of the receptacle and secures the filter bag by means of the weld that joins the two, while the external structure presses the external part of the receptacle, in the neck region, forming a support for the filter bag , with the filter bag suspended under the receptacle, wherein it can receive hot water or other liquid for the straining and beverage preparation process.

## Description

### FIELD OF INVENTION

**.** The present invention belongs to the technological sector of Mechanics and Materials, more specifically filters and Sustainability and refers to a compactable coffee filtering or straining device with support for the filter bag.

**.** Furthermore, the present invention refers to a filter with biodegradable and/or compostable material and the changes necessary to adapt the characteristics of said material to the beverage preparation process.

### BACKGROUND OF INVENTION

**.** In the fields of filters and strainers for preparing beverages such as coffee and tea, it is possible to observe the growing demand for solutions for preparing beverages, especially coffee, without the need for the use of machines with capsules, a response to saturation of espresso coffees from machines and the decline in quality of coffee capsules over time. Furthermore, the use of a filter to place the ground coffee beans offers versatility and portability, as coffee can be made anywhere, without relying on machines or capsules. In this context, some solutions and technologies have already been developed to solve these inconveniences.

**.** Document US 2004/0168578 describes a single-dose filter with support, made of a non-woven fiber, and its filter paper supports with plastic laminate. However, the cellulose material filter cannot be recycled after using the product, as the coffee grounds contaminate the waste, transforming it into non-recyclable organic waste. Furthermore, the plastic laminate makes it impossible to recycle the support material.

. Document BR 11 2013 024980-3 describes a coffee capsule an inner filter sheet made specifically of polyethylene, polypropylene, polystyrene, polyester or a high density laminate and is therefore not compatible with the composting process.

. Document US 2018/0028014 describes filter sheets made from polylactic acid-based resin. However, these leaves have high permittivity, so the coffee would not be filtered for the necessary time.

. As can be seen, in the state of the art there are disposable coffee filtering or straining devices with support for the filter bag, with a filter composition made of non-woven material composed of polyethylene and polypropylene with cardboard tabs covered with polyethylene. However, for these devices, there is no potential for recycling in the material used, as the fusion of the structures, non-woven material, welded to cardboard, causes the materials to become contaminated for possible recycling.

. Therefore, there is no device that adequately solves the problem of coffee consumption through environmentally friendly portable single-dose filters.

. To solve these problems, the present invention designs a strainer filter for preparing beverages such as coffee and tea, its composition being biodegradable according to EN. 13432 (European industrial composting standard for plastic packaging) and ASTM D6400 (North American standard), by changing the composition of the filter material. Furthermore, structural changes to the measurements of the welding areas and the inclusion of an unprecedented additional structure are proposed with the aim of reducing the filtration area, solving a problem of increased filter permittivity caused by the use of biodegradable and/or compostable material. With this invention, the extraction time is extended and the right final straining time is guaranteed for a better final result in the beverage extracted through filtration.

**.** Therefore, there is no equivalent solution in the state of the art to that presented here in the present invention, which combines technical differences, economic advantages and reliability, safety.

### OBJECTIVES OF THE INVENTION

**.** Thus, it is an objective of the present invention to provide a solution to the challenges and limitations listed above, presenting a foldable and compactable coffee strainer filter, with foldable supporting tabs in order to fix the strainer above the bag where the beverage will be made; Therefore, it is practical and portable.

**.** It is also an objective of the present invention to provide a disposable single-dose filter, made of biodegradable and/or compostable materials, with greater degradation speed, in order to minimize environmental damage.

**.** It is also an objective of the present invention to provide a disposable single-dose filter, with structural changes that increase the straining time, providing a full-bodied and satisfactory beverage.

**.** It is also an objective of the invention to offer a filter with lower permittivity, without the need to add a second layer of filter material, saving material.

### SUMMARY OF THE INVENTION

**.** The present invention achieves these and other objectives through a single-dose filter sachet for preparing beverages that comprises:
- a filter bag;
- the filter bag comprising a cut line at the top;
- one or more supporting tabs;
- the supporting tabs being welded in the central region of said filter balg;
- the supporting tabs further comprising a connecting frame, an internal supporting structure and an external supporting structure; and
- the connecting frame being a thin upper edge and sides of the supporting tabs, and is the part that is welded, by means of paper welding, to the filter bag;

wherein the supporting tabs are foldable so that they start from a first state in which the connecting frame, the internal supporting structure and the external supporting structure fit together in a juxtaposed manner when they are on the same plane and are extended to a second state where the internal supporting structure detaches from the connecting frame and the external supporting structure detaches from the internal structure, so as to form connected non-parallel hollow planes,
in the first state, the sachet is closed, with the beverage preparation product inside the filter bag and the sachet is in a flattened shape; the connecting frame, the internal supporting structure and the external supporting structure are in the same plane juxtaposed, fixed by the connecting frame flush with the lateral surface of said filter bag and when the preparation of the beverage is desired, the sachet is taken to a second state through the opening of the filter bag by breaking the cutting line, forming a filter mouth and the internal and external structures of the supporting tabs, previously coplanar, are folded, so that three hollow planes are formed, connected in an 'N'-shaped lateral profile on each side, with the connecting frame remaining flush with the filter bag, the internal structure forming a tongue that presses the internal part of the receptacle and secures the filter bag by means of the weld that joins the two, while the outer structure presses on the outer part of the receptacle, in the region of the neck, forming a support for the filter bag, the filter bag being suspended on the receptacle, where it can receive hot water or another liquid for the filtering process and preparation of the beverage

### BRIEF DESCRIPTION OF THE DRAWINGS

**.** The present invention will be described based on the drawings attached here, which illustrate:
- Figure 1 represents the front view of the complete sachet 01 in a preferred embodiment in a first closed state.
- Figure 2 represents the perspective view of sachet 01 in a preferred embodiment in a second open state.
- Figure 3 represents the perspective view of sachet 01 in a preferred embodiment in a second open state coupled to a receptacle.
- Figure 4 represents the bottom view of sachet 01 preferred embodiment with the folded base and details of the retardant structures.
- Figure 5 represents the front view of sachet 01 in a second realization, complete concreteness, with emphasis on the points where the weld is applied.
- Figure 6 represents the front view of the complete sachet 01 in a second realization, complete concreteness, in a first closed state.- Figure 7 represents the perspective view of sachet 01 in a second realization in a second open state.
- Figure 8 represents the bottom view of sachet 01 in a second concretion with the base folded.
- Figure 9 represents the bottom view of sachet 01 in a second realization in an open state coupled to a container

### DETAILED DESCRIPTION OF THE INVENTION

**.** The present invention relates to a device, a foldable and compactable coffee strainer filter, with foldable supporting tabs to secure the strainer above the bag made of compostable material. The present invention uses an innovative construction to correct the increase in permittivity resulting from the use of biodegradable and/or compostable materials, which aims to reduce the effective straining area, making the beverage have more time in contact with the coffee powder and, consequently, changes to the flexible supporting tab so that the device can be supported for longer.

**.** The present invention presents numerous technical and economic advantages when compared to the state of the art, some of which are listed below:
- The present invention constitutes an inventive construction, which uses biodegradable and/or compostable materials without interfering with the mode of consumption already adopted by society, presenting itself as an option with less environmental impact;
- The present invention presents an efficient construction, compatible with modern manufacturing processes without disrupting the use of already implemented machinery;
- The present invention combines characteristics of sustainability, economy, productivity in order to present an optimized coffee filter concept.

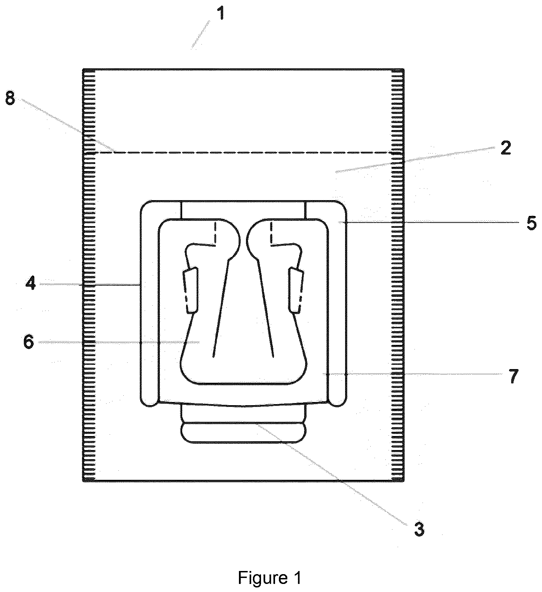

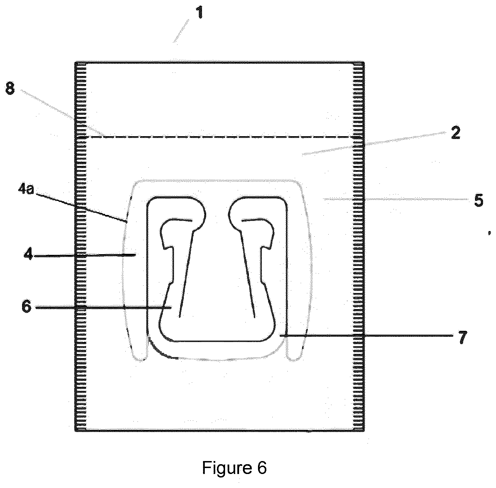

**.** Referring to figure 1 and 6, the sachet 01 comprises a filter bag 02 and supporting tabs 04. In a preferred embodiment of the present invention, the filter bag is formed by a folded filter sheet, with welding areas on its side parts.

**.** The filter bag 02 also comprises a cut line 08 in the upper part in order to facilitate the opening of the sachet 01.

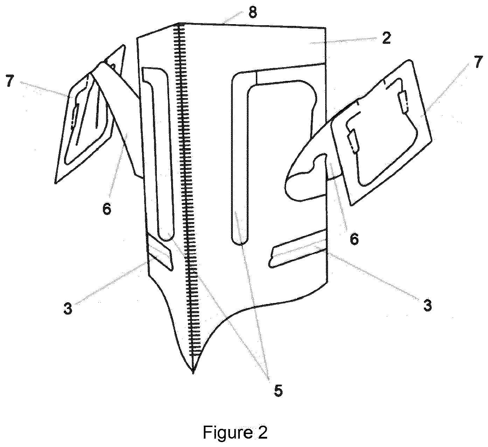

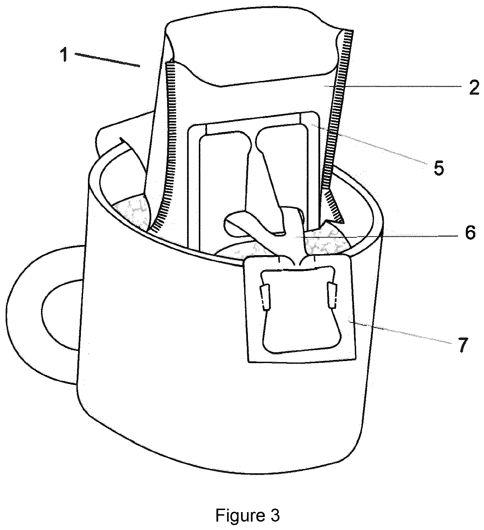

**.** According to a first concrete, illustrated in figures 2 and 3, the present invention comprises a retardant structure 03 on each side, made of waterproof or semi-impermeable material, in order to reduce the flow of the strained beverage, and increase the straining time, contributing to the final quality of the beverage. This retardant structure 03 allows the use of a smaller number of PLA layers of the filter in cases where the PLA has high permeability, reducing the cost of sachet production.

**.** Furthermore, the filter bag 02 is made of biodegradable and/or compostable material, preferably polylactic acid (PLA), whose biodegradation is aerobic by microorganisms and under specific conditions (temperature, humidity, presence of microorganisms and oxygen). These conditions are described in standards such as EN 13432 (European industrial composting standard for plastic packaging) or ASTM D6400 (North American standard). These two standards, for example, determine that the material must degrade 90% of its mass within 180 days, considering the specific compostability conditions mentioned. At the end of the process (for example, in industrial composting), only water, carbon dioxide (CO2) and biomass remain. It can be industrially or at home compostable.

**.** Furthermore, the material of the filter bag 02 can have a weight between 27g/m² and 50g/m², and it is preferable to use a weight of 30g/m² to conserve filtration time and production costs. Thus, the material used has a more homogeneous distribution of fibers, without the need to increase the amount of fibers per unit of area, impacting on the reduction of cost and composting condition.

**.** The supporting and large tabs 04 are welded to the central region of the filter bag 02. The supporting tabs 04 comprise a connecting frame 05, an internal supporting structure 06 and an external supporting structure 07.

**.** The connecting frame 05 comprises a thin upper edge and sides of the supporting tabs 04, and is the part that is welded, by means of paper welding, to the filter bag 02. The end of the internal frame 06 is also welded to the filter bag 02.

**.** The supporting tabs 04 are foldable, so that the internal supporting structure 06 detaches from the connecting frame 05 and the external supporting structure 07 from the internal structure 06, so as to form 3 non-parallel hollow planes connected together.

**.** Furthermore, the supporting tab 04 is continuously formed from a flat and straight cellulosic material, so that the connecting frame 05, the internal supporting structure 06 and the external supporting structure 07 fit together in a juxtaposed manner when they are in the same plane.

**.** The supporting tab 04 can be made of cardboard, covered with PLA laminate, so that the structure is firm and supports the weight of the system, in order to increase compostability. The supporting tab 04 can be attached to the device at different heights on the sides of the filter to adjust to the size of the filter in relation to the proportions of the bag. Embodiments in which the supporting tab is made of paperboard coated with polyethylene are also envisaged.

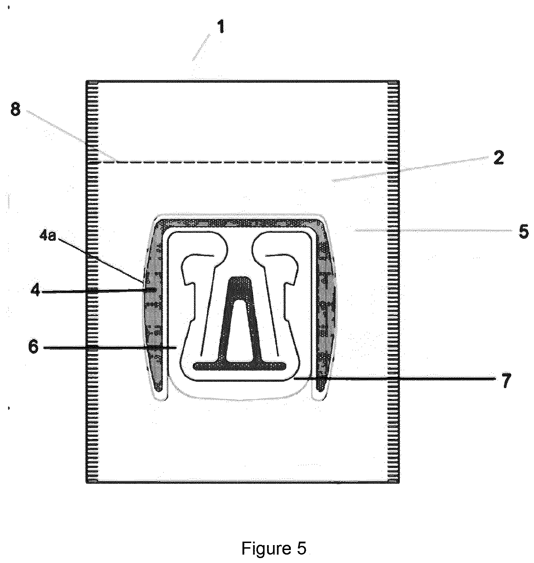

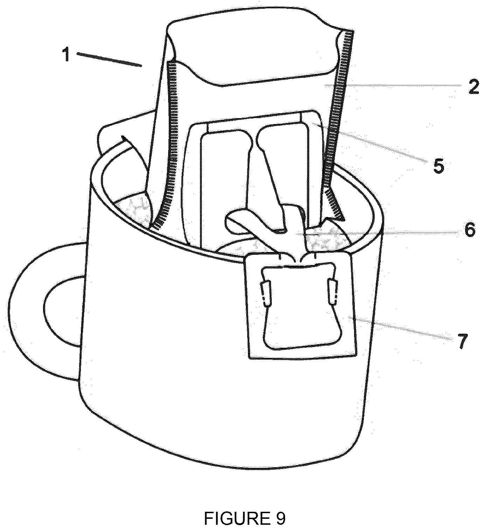

**.** According to a second concreteness, illustrated in figures 5 to 9, the present invention comprises a support handle 04 with a domed region 04a in which the weld area is significantly increased, in order to decrease the area, contributing to the final quality of the beverage. This second realization does not require the use of a retardant structure 03 because it incorporates its inventive concept in the welding region of the 04 handles, also allowing the use of a smaller number of layers of PLA of the filter in cases where the PLA has high permeability, reducing the cost of production of the sachet.

### Device operation

. The device operates in 2 main states. In a first state, as shown in Figure 1, the sachet 01 is closed, with the ground coffee grain or herbs inside the filter bag 02. Furthermore, the sachet 01 is in a flattened shape, the connecting frame 05, the internal supporting structure 06 and the external supporting structure 07 are in the same juxtaposed plane, fixed by the connecting frame 05 flush with the side surface of the filter bag 02.

. In this first state, the product's high portability and high packaging factor are guaranteed, since the closed sachet allows the movement of the already fractionated powder for beverage preparation.

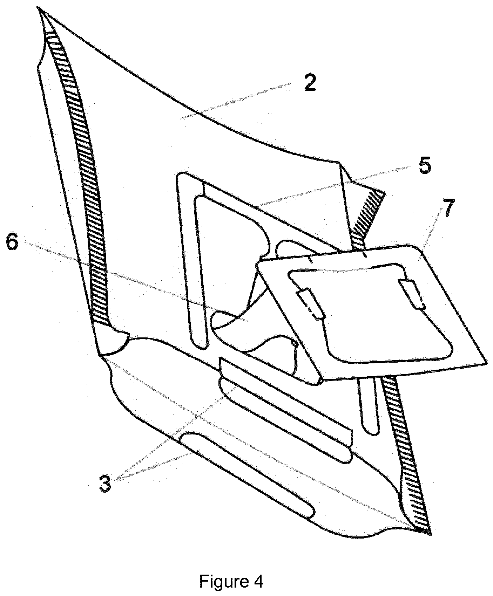

. In reference to Figure 2, when the preparation of the beverage is desired, the sachet 01 must be opened through the cutting line 08, forming a filter mouth 09. The structures of the supporting tabs 04, previously coplanar, are folded so that three hollow planes are formed, connected in an 'N'-shaped lateral profile on each side, wherein the connecting frame 05 remains close to the filter bag 02, the internal structure 05 forms a tongue that presses the internal part of the receptacle and secures the filter bag 02 by means the weld that joins the two. The base of the sachet must be folded, according to Figure 4, so that the retardant structures 03 are at the bottom of the assembled set. while the outer structure 07 presses on the outer part of the receptacle, in the region of the neck, forming a support for the filter bag.

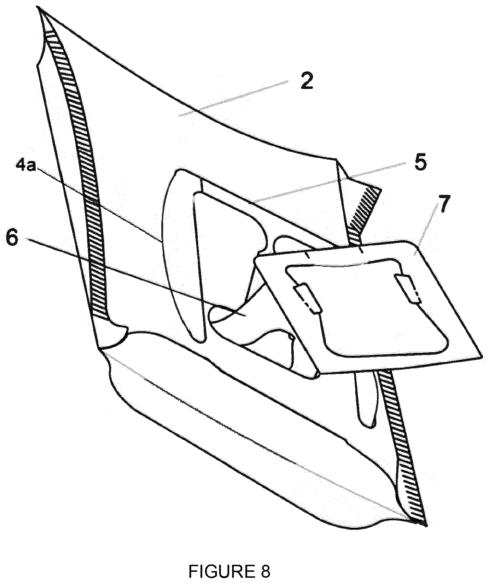

. This way, the filter bag is suspended under the receptacle, where it can receive hot water or another liquid for the straining and beverage preparation process, as shown in Figure 3 and 8. This way, it is possible to prepare the coffee without needing an espresso machine or capsule.

. Furthermore, the dimensions of the supporting tabs 04 may vary according to different embodiments, in order to ensure the sachet fits into receptacles such as cups and glasses of different sizes, wherein the height of the connecting frame 05 varying between 45mm and 51mm, and the width of said frame varying between 36mm and 46mm, and the height of the external structure 07 varying between 42mm and 47mm. Furthermore, more robust embodiments are capable of supporting a greater volume of water and preparing a larger dose.

. As it is made from compostable material, the final mixture of coffee grounds and filter bag resulting from coffee preparation can be easily compostable. Furthermore, the supporting tabs are recyclable, as they are made of paper and laminated in PLA.

. This increase in width is important for the device to stay up for longer during the coffee straining process, since it allows the use of biodegradable material and/or retardant structures 03 to slow down the straining process, making the beverage more full-bodied.

. In reference to Figure 4, the retardant structures 09, attached to the bottom of the filter bag 02, significantly reduce the filtration area, increasing the process time. This unprecedented solution is necessary due to the very fast flow rate when filtering biodegradable and/or compostable material. Therefore, increasing the filtering time is essential for better filtration, increasing the aroma and flavor of the beverage. Therefore, the ideal total draining (straining) time is 55 seconds to 1 minute and 15 seconds, offering greater extraction of flavor and aroma, without highlighting bitterness, while beverages that filter at greater speed are unable to highlight their sensory characteristics, fragrance, aroma, flavor well.

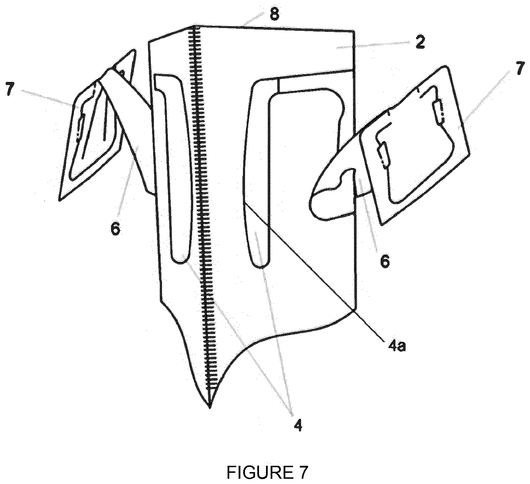

**.** Also, in reference to figure 7, according to a second concretion, the decrease in the area is due to the increase in the weld area of the support loop 04 through a domed region 04a. The same effect is achieved in relation to the retarding structures. The materialization may vary according to the quality and uniformity of the fibers of the filter material, in order to choose the solution that uses the least material but maintains the optimal filtration time.

**.** Having described an example of a preferred embodiment of the present invention, it must be understood that the scope of the present invention covers other possible variations of the described inventive concept, being limited only by the content of the claims alone, including possible equivalents.

## Claims

1. Single-serve filter sachet (1) for preparing beverages, **characterized by** it comprising:
- a filter bag (2);
- the filter bag (2) comprising a cutting line (8) in the upper part;
- one or more supporting tabs (4);
- the supporting tabs being welded in the central region of said filter bag (2);
- the support tabs (4) further comprising a connecting frame (5), an internal supporting structure (6) and an external supporting structure (7);
- the connecting frame (5) being a thin upper edge and sides of the supporting tabs (4), and is the part that is welded, by means of paper welding, to the filter bag (2);
wherein the supporting tabs (4) are foldable, so that they start from a first state in which the connecting frame (5), the internal supporting structure (6) and the external supporting structure (7) fit together in a juxtaposed manner when they are in the same plane and are folded to a second state wherein the internal supporting structure (6) detaches from the connecting frame (5) and the external supporting structure (7) detaches from the internal structure (6), to form 3 non-parallel hollow planes joined when preparation of the beverage is desired, the sachet (1) is taken to a second state through the opening of the filter bag (2) by breaking the cutting line (8), forming a filter mouth (9) and the internal (6) and external (7) structures of the supporting tabs (4), previously coplanar, are folded so that three hollow planes are formed, joined in an 'N'-shaped lateral profile on each side, wherein the connecting frame (5) remains flush with the filter bag (2), the internal structure (6) forms a tongue that presses the internal part of the receptacle and secures the filter bag (2) by means of the weld that joins the two, while the external structure (7) presses the external part of the receptacle, in the neck region, forming a support for the filter bag (2), with the filter bag suspended under the receptacle, wherein it can receive hot water or other liquid for the straining and beverage preparation process.

2. Sachet, according to claim 2, **characterized by** it additionally comprising retardant structures (3) so that, in the first state, the sachet (1) is closed, with the product for preparing the beverage inside the filter bag (2) and the sachet (1) is in a flat shape; the connecting frame (5), the internal supporting structure (6) and the external supporting structure (7) are in the same plane juxtaposed, fixed by the connecting frame (5) flush with the lateral surface of said filter bag (2) and the retardant structures (3), attached to the bottom of the filter bag (2), reduce the filtering area, increasing the time of the straining process.

3. Sachet, according to claim 1, **characterized by** the supporting tab (4) having a domed region (4a) so that, in the first state, the sachet (1) is closed, with the product for preparing the beverage inside the filter bag (2) and the sachet (1) is in a flattened form; the connecting frame (5), the internal supporting structure (6) and the external supporting structure (7) are in the same plane juxtaposed, fixed by the connecting frame (5) flush with the lateral surface of said filter bag (2 ) and the domed region (4a) increases the welding area of said supporting tab (4), reducing the filtering area, increasing the time of the straining process

4. Sachet according to claims 1 to 3 **characterized by** said filter bag (2) being made of biocompostable material, in particular polylactic acid (PLA) with a grammage between 27g/m² and 50g/m², whose biodegradation is aerobic by microorganisms.

5. Sachet according to claims 1 to 4, **characterized by** the supporting tab (4) being made of recyclable cardboard, with polylactic acid (PLA) lamination.

6. Sachet according to any one of claims 1 to 5, **characterized by** the supporting tab (4) being fixed to the side of the device at various heights compatible with a receptacle that secures said device.

7. Sachet according to any one of claims 1 to 6, **characterized by** the supporting tabs (4) having sizes between 36mm x 45mm and 51mm x 46mm, in order to be packaged in different receptacles.

8. Sachet according to any one of claims 1 to 7, **characterized by** it being used to prepare coffee or tea.

9. Sachet according to any one of claims 1 to **8, characterized by** the straining time after applying water being 55 seconds to 1 minute and 30 seconds.
